# EUROPÄISCHE PATENTANMELDUNG

(11) **EP 1 642 698 A2**
(43) Veröffentlichungstag der Anmeldung: **05.04.2006**
(21) Anmeldenummer: 05027188.1
(22) Anmeldetag: 09.09.2003
(51) Int. Cl.: B29C 45/57

(54) **Verfahren und Vorrichtung zum Ausbilden eines Abschnitts eines kastenförmigen Behältnisses**

(30) Priorität: 09.09.2002 DE 10241858; 21.10.2002 DE 10249078; 11.11.2002 DE 10252648
(62) Teilanmeldung aus: 03020334.3
(71) Anmelder: ICOS GmbH, 38228 Salzgitter (DE)
(72) Erfinder: Kelpe, Hans-Rudolf, 30827 Garbsen (DE); Pichler, Ernst, 31249 Hohenhameln (DE)
(74) Vertreter: Stoffregen, Hans-Herbert

(57) **Zusammenfassung**

Die Erfindung bezieht sich auf ein Verfahren und eine Vorrichtung zum Ausbilden eines Abschnitts eines kastenförmigen Behältnisses unter Verwendung eines Spritzgießwerkzeuges mit einem den Abschnitt umgebenden Formhohlraum (1040), in den zum Ausbilden des Abschnitts plastifizierter Kunststoff eingebracht wird und nach dem Aushärten das Spritzgießwerkzeug geöffnet und der Abschnitt aus dem Formhohlraum entfernt wird. Um die Oberflächen der auszubildenden Abschnitte besser auszudrüken und die Maßhaltigkeit der Spritzteile zu verbessern, wird vorgeschlagen, dass der plastifizierte Kunststoff sowohl in den Formhohlraum (1040) als auch in einen mit diesem verbundenen volumenveränderbaren Verdrängerraum (1042) eingebracht wird, in dem ein einen Begrenzungsflächenabschnitt (1046) des Formhohlraums bildender Kolben (1044) nach Beendigung des Einbringens des plastifizierten Kunststoffs zum Verdrängen plastifizierten Kunststoffs aus dem Verdrängerraum hinein in den Formhohlraum verstellt wird.

## Beschreibung

Die Erfindung bezieht sich auf ein Verfahren zum Ausbilden eines Abschnitts, wie Griff, Fachwerkabschnitt, Außenwandung oder Boden, eines kastenförmigen Behältnisses unter Verwendung eines Spritzgießwerkzeuges mit einem den Abschnitt umgebenden Formhohlraum, in den zum Ausbilden des Abschnitts plastifizierter Kunststoff eingebracht wird und nach dem Aushärten das Spritzgießwerkzeug geöffnet und der Abschnitt aus dem Formhohlraum entfernt wird.

Auch nimmt die Erfindung Bezug auf eine Vorrichtung zur Herstellung eines Abschnitts, wie Griff, Fachwerkabschnitt, Außenwandung oder Boden, eines kastenförmigen Behältnisses umfassend einen zur Ausbildung des Abschnitts bestimmten und Außengeometrie des Abschnitts vorgebenden Formhohlraum sowie eine Spritzdüse, über die plastifizierter Kunststoff dem Formhohlraum zuführbar ist.

Der DE 40 22 884 A1 ist ein Flaschenkasten aus Kunststoff mit mindestens einem Griffteil zum Transport des Kastens zu entnehmen. Dabei besteht das Griffteil aus einem Kernelement und mindestens einem Außenelement, das zumindest die Unterseite des Kernelements umschließt, wobei das Kernelement eine andere Härte als das Außenelement aufweist. Das Kernelement wird vorzugsweise gemeinsam mit dem Kastenkörper als einstükkiges Spritzteil hergestellt. Anschließend wird das Außenelement aufgebracht. Dabei ist bevorzugterweise ein Zweikomponentenspritzen vorgesehen. Ein Aufspritzen und Aufschäumen ist gleichfalls möglich. Unabhängig von der Art, wie das Außenelement auf das Kernelement aufgebracht wird, weist der Griff im Bereich des Außenelementes eine Breite auf, die Größer als die des Kernelementes ist.

Bei einem Transportbehälter aus Kunststoff nach der DE 199 36 229 A1 wird im Bereich seines Tragegriffs ein getrennt gefertigtes Bauteil eingesetzt. Eine entsprechende Lösung findet sich auch bei dem DE 201 05 567 U1 wieder. Bei dieser Art der Ausbildung des Handgriffs ergibt sich der Nachteil, dass der Einsatz in die Form eingelegt werden muss, bevor der Kunststoff eingespritzt wird. Dies bedeutet, dass der Einsatz genau fixiert werden muss, um bei einem fertigen Kasten einen Griff zu erhalten, der den gewünschten Anforderungen genügt. Die Praxis hat jedoch gezeigt, dass dies häufig nicht der Fall ist. Unabhängig hiervon ist von Nachteil, dass die Taktzeiten durch das Einlegen der Einsätze unerwünscht verlängert werden.

Im Griffbereich von Kästen getrennt gefertigte Bauteile einzulegen, ist auch aus dem DE 201 05 567 U1 und DE 299 24 066 U1 bekannt.

Bei ein Profilleiste für Kraftfahrzeuge nach der DE 17 55 596 können Endstücke angespritzt werden. Zum sicheren Verbinden sind hinterschnittene Ausnehmungen vorgesehen.

In der DE 195 13 465 C1 wird eine Anordnung aus zwei miteinander zu verbindenden Teilen beschrieben, die aus unterschiedlichen Materialien bestehen und umspritzt werden. Eine Verankerung kann durch schwalbenschwanzförmig ausgebildete Kanten erfolgen.

Der vorliegenden Erfindung liegt das Problem zugrunde, ein Verfahren und eine Vorrichtung der eingangs genannten Art derart weiterzubilden, dass Oberflächen der auszubildenden Abschnitte besser ausgedrückt und die Maßhaltigkeit der Spritzteile verbessert wird. Ferner soll eine Teileschwindung reduziert werden.

Erfindungsgemäß wird das Problem im Wesentlichen durch ein Verfahren der eingangs genannten Art dadurch gelöst, dass der plastifizierte Kunststoff sowohl in den Formhohlraum als auch in einen mit diesem verbundenen volumenveränderbaren Verdrängerraum eingebracht wird, in dem ein einen Begrenzungsflächenabschnitt des Formhohlraums bildender Kolben nach Beendigung des Einbringens des plastifizierten Kunststoffs zum Verdrängen plastifizierten Kunststoffs aus dem Verdrängerraum in den Formhohlraum hinein verstellt wird.

Insbesondere ist vorgesehen, dass der Verdrängerraum nur teilweise mit dem plastifizierten Kunststoff gefüllt wird.

Nach einer Weiterbildung sieht die Erfindung vor, dass der Kolben vor oder während des Einbringens des plastifizierten Kunststoffs in eine zurückgezogene Stellung bewegt wird und nach Beendigung des Einbringens des plastifizierten Kunststoffs in Richtung des Formhohlraums verstellt wird derart, dass der Begrenzungsflächenabschnitt des Kolbens in Entformstellung des Spritzgießwerkzeuges in die Begrenzung des Formhohlraums bündig übergeht.

Eine Vorrichtung zuvor beschriebener Art zeichnet sich im Wesentlichen dadurch aus, dass von dem Formhohlraum ein volumenveränderbarer Verdrängerraum ausgeht, in dem ein Kolben verschiebbar angeordnet ist, dessen formhohlraumseitig verlaufende Stirnfläche Begrenzungsflächenabschnitt des Formhohlraums ist.

Dabei ist insbesondere vorgesehen, dass der Verdrängerraum derart dimensioniert ist, dass dieser nach Abschluss des Zuführens des plastifizierten Kunststoffs nur bereichsweise mit dem Kunststoff gefüllt ist.

Erfindungsgemäß ist vorgesehen, dass von dem den Abschnitt in dem Spritzgießwerkzeug umgebenden Hohlraum ein volumenveränderbarer Verdrängerraum ausgeht, in dem ein Kolben verschiebbar angeordnet ist, dessen hohlraumseitige Stirnfläche Begrenzungsflächenabschnitt des ersten Hohlraums ist, wobei der Verdrängerraum gegebenenfalls derart dimensioniert sein kann, dass dieser nach Abschluss des Zuführens des plastifizierten Kunststoffs nur bereichsweise mit dem Kunststoff gefüllt ist.

Durch den Verdrängerraum ergib sich der Vorteil, dass dieser mit plastifiziertem Kunststoff gefüllt werden kann, um sodann während der gesamten Abkühlphase, in der über die zum Führen des plastifizierten Kunststoffs benötigte Spritzdüse/Spritzdüsen kein weiteres Material nachgespritzt wird, aus dem Verdrängerraum, der auch als Überlaufkammer zu bezeichnen ist, Material in den ersten Hohlraum eingebracht wird, so dass ein ansonsten zu beobachtendes Einfallen des ersten Abschnitts, insbesondere Griffs eines Kastens unterbleibt. Somit ist die erforderliche Stabilität gegeben, wodurch die Möglichkeit eröffnet wird, den Griff derart zu dimensionieren, dass nach Umspritzen des ersten Abschnitts mit dem weicheren Material die erforderliche Stabilität sichergestellt ist.

Der Verdrängerraum dient folglich als Reservoir für den ersten Abschnitt.

Durch die erfindungsgemäße Lehre werden die Oberflächen besser ausgedrückt und die Maßhaltigkeit der Spritzteile verbessert. Eine Teileschwindung wird reduziert. Auch die Stabilität bei einer weiteren Wandstärkenverdickung wird verbessert. Somit ist ein Umspritzen mit dem weichen Material sowohl innen- als auch außenseitig möglich, da der erste Abschnitt die erforderliche Dimensionierung aufweist. Gleichzeitig kann der Griff eine Dimensionierung üblicher Griffe aufweisen.

Auch besteht die Möglichkeit, den Verdrängerraum oder die Überlaufkammer nicht vollständig mit plastifiziertem Material zu füllen, so dass beim Verfahren des Kolbens in Richtung des ersten Hohlraums Gas eingeleitet wird, so dass ein Inmould-Griff herstellbar ist.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung von der Zeichnung zu entnehmenden bevorzugten Ausführungsbeispielen.

Es zeigen:
- Fig. 1: eine perspektivische Darstellung eines Ausschnitts eines Spritzgießwerkzeuges zum Spritzen eines Griffs eine Kastens, der teilweise weggebrochen ist,
- Fig. 2: einen Querschnitt durch das Werkzeug gemäß Fig. 1,
- Fig. 3: eine Draufsicht auf das Werkzeug gemäß Fig. 1,

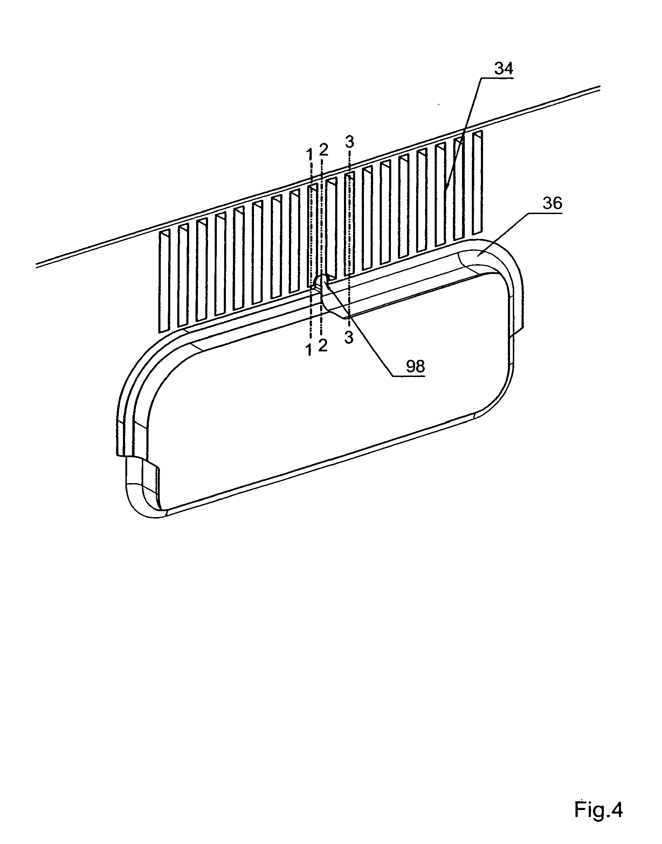

- Fig. 4: einen Ausschnitt eines Griffs,
- Fig. 5: einen Schnitt entlang der Linie 1-1 in Fig. 4,
- Fig. 6: einen Schnitt entlang der Linie 2-2 in Fig. 4,
- Fig. 7: einen Schnitt entlang der Linie 3-3 in Fig. 4,
- Fig. 8: einen Kasten in perspektivischer Darstellung,
- Fig. 9: einen Ausschnitt eines Kastens,
- Fig. 10: ein erstes Werkzeugteil zum Spritzen eines Kastens,
- Fig. 11: ein zweites Werkzeugteil zum Spritzen eines Kastens,
- Fig. 12 - 27: weitere Ausgestaltungen der Erfindungen,
- Fig. 28: eine zweite Ausführungsform eines zweiten Werkzeuges,
- Fig. 29: einen Ausschnitt aus einem Werkzeug zum Ausbilden eines ersten Abschnitts eines Griffs und

Fig. 30 - 33 Prinzipdarstellungen eines Ausschnitts des ersten Werkzeuges. Aus Gründen der Vereinfachung wird nachstehend vom Griff als dem erfindungsgemäß auszubildenden Behältnisabschnitt gesprochen, ohne hierdurch die Erfindung einzuschränken. Vielmehr soll das Wort "Griff" als Synonym für alle denkbaren Abschnitte eines Behältnisses verstanden werden.

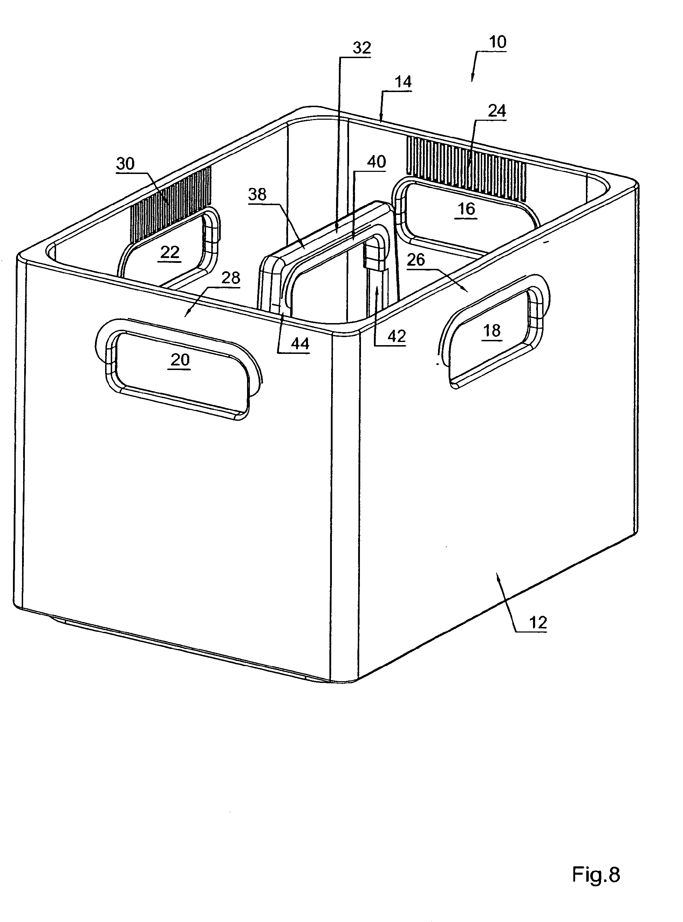

In Fig. 8 ist rein beispielhaft ein Behältnis in Form eines Flaschenkastens 10 dargestellt, der aus einem quaderförmigen Grundkörper 12 besteht und im Bereich seines oberen Randes 14 Aussparungen 16, 18, 20, 22 aufweist, die Griffe 24, 26, 28, 30 begrenzen. Ferner ist im Ausführungsbeispiel ein Mittelgriff 32 vorgesehen. Die Griffe 24, 26, 28, 30 können innenseitig eine durch Rippen gebildete Profilierung oder sonstige Geometrie aufweisen. Insoweit wird auf herkömmliche Flaschenkästen verwiesen.

Um einen entsprechenden Flaschenkasten 10 zu transportieren, werden ein oder mehrere Griffe 24, 26, 28, 30, 32 erfasst. Um den Tragkomfort zu erhöhen, besteht dieser aus einem ersten Abschnitt 34 und aus einem zweiten Abschnitt 36 eines zweiten Materials, das weicher als das erste ist. Der zweite Abschnitt 36 erstreckt sich dabei sowohl entlang oberen Randes der jeweiligen Öffnung 16, 18, 20, 22 als auch abschnittsweise entlang deren Seitenrändern, wie in der Fig. 8 verdeutlicht ist. Beim Mittelgriff 32 wird der aus härterem Material bestehende erste Abschnitt von einem Querschenkel 38 gebildet, der unterseitig mit einem entsprechen zweiten Abschnitt 40 versehen ist, der sich auch abschnittsweise entlang Seitenschenkeln 42, 44 des Mittelgriffs erstreckt.

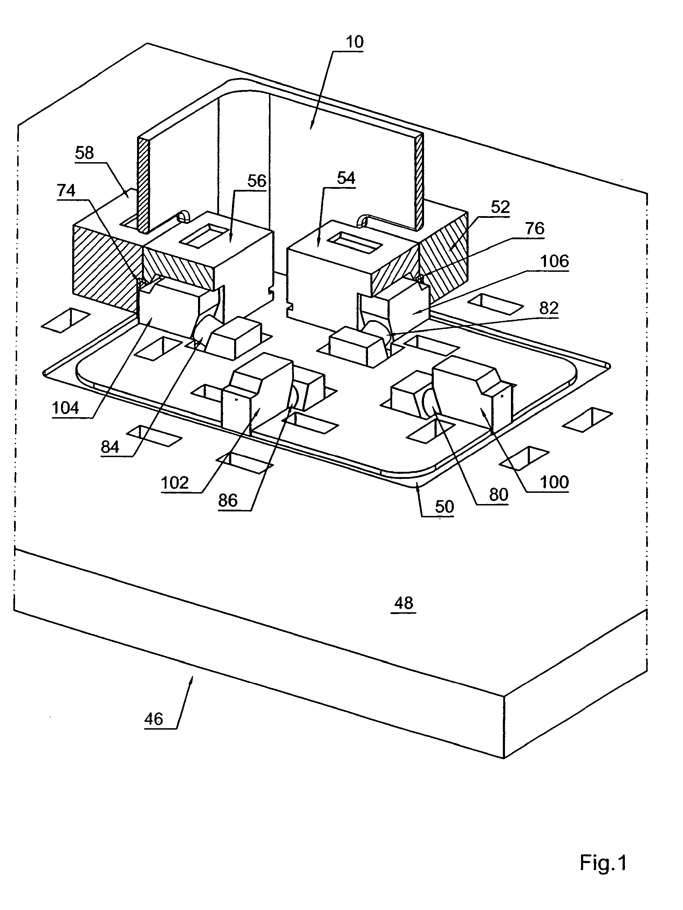

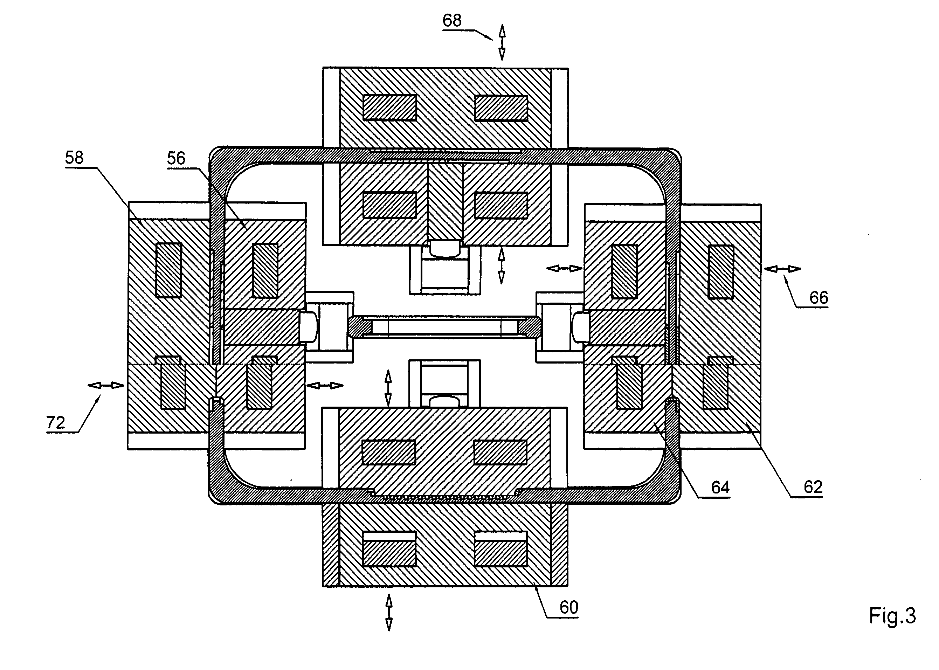

Der jeweils erste Abschnitt 34 des Griffs 24, 26, 28, 30 ist gemeinsam mit dem Kastenkörper 12 als einstückiges Spritzteil hergestellt. Hierzu wird ein erstes Spritzgießwerkzeug benutzt. Nach Spritzen des Körpers 12 wird dieser aus dem ersten Spritzgießwerkzeug entnommen und einem zweiten Spritzgießwerkzeug 46 zugeführt, wie dies rein prinzipiell den Fig. 1 bis 3 zu entnehmen ist.

Das zweite Spritzgießwerkzeug 46 weist eine Grundplatte 48 auf, in der im Ausführungsbeispiel eine umlaufende Vertiefung 50 vorgesehen ist, die der Geometrie des oberen Randes 14 des Kastens 10 entspricht, um diesen eindeutig auf der Grundplatte 48 zu positionieren. Andere Ausrichthilfen sind gleichfalls möglich.

Im Bereich der ersten Abschnitte 34 der Griffe 24, 26, 28, 30 sind Schieber 52, 54, 56, 58, 60, 62, 64 in Pfeilrichtung 66, 68, 70, 72 verstellbar, um in beabstandeter Stellung den Kasten 10 zu positionieren bzw. aus dem Spritzgießwerkzeug 46 zu entfernen. Bei zusammengefahrenen Schiebern 52, 54, 56, 58, 60, 62, 64 begrenzen diese einen Hohlraum 74, 76, der einerseits von unterseitigem Rand 78 des jeweiligen ersten Abschnitts 34 des Griffs 24, 26, 28, 30 und andererseits von Innenwandabschnitten der jeweiligen den entsprechenden ersten Abschnitt 34 umgebenden Schiebern 52, 54, 56, 58, 60, 62, 64 begrenzt ist. In diesen Hohlraum 75, 76 wird sodann über jeweils eine Düse 80, 82, 84, 86 Kunststoff gespritzt. Hierbei kann es sich z. B. um Polyurethan handeln.

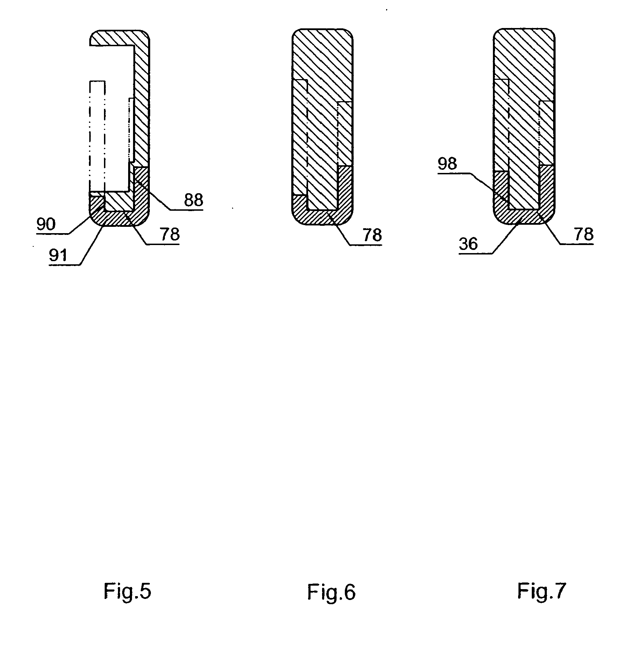

Durch die Geometrie des Hohlraums 74, 76 bedingt verläuft entsprechend der Schnittdarstellung der Fig. 5 bis 7 der zweite Abschnitt 36 mit seinen Außenflächen bündig zu den Außenflächen des ersten Abschnitts 34.

Des Weiteren ist der erste Abschnitt 34 hohlraumseitig gestuft ausgebildet, um eine große Kontaktfläche zu dem in den Hohlraum 74, 76 zu spritzenden Kunststoff zur Verfügung zu stellen, wodurch eine gewünschte innige Verbindung erzielbar ist. Die entsprechende Begrenzungsfläche 78 besteht aus zwei Stufen 88, 90, wobei im Ausführungsbeispiel innen verlaufende Stufe 88 kürzer als außen verlaufende Stufe 90 ist. Hierdurch erfährt der jeweilige Griff 24, 26, 28, 30 eine ausreichende Stabilität, ohne dass Einbußen in Bezug auf den Tragkomfort gegeben sind. Selbstverständlich können die Stufen 88, 90 auch eine gleiche Höhe oder eine solche aufweisen, die umgekehrt verläuft. Dies soll in den Fig. 5 - 7 durch die gestrichelte Darstellung angedeutet werden.

Wie die Schnittdarstellung gemäß Fig. 7 verdeutlicht, weist der zweite Abschnitt 36 in einem Bereich, in dem über die Düse 80, 82 , 84, 86 dem Hohlraum 74, 76 der Kunststoff zugeführt wird, eine Anspritzung 98 auf. Ansonsten ist der Querschnittsverlauf des zweiten Abschnitts 36 gleichbleibend. Der Querschnitt des ersten Abschnitts 34 hängt von dessen Geometrie ab, ob z. B. Rippen vorhanden sind, wie dies im Ausführungsbeispiel zutrifft, ohne dass hierdurch die erfindungsgemäße Lehre verlassen wird.

Die Düsen 80, 82, 84, 86 werden von Düseneinsätzen 100, 102, 104, 106 aufgenommen, die stationär von der Grundplatte 48 ausgehen und den jeweiligen inneren Schieber 54, 56, 64 durchsetzen. Der Kunststoff selbst wird den Düsen 80, 82, 84, 86 über in einem mittig angeordneten Verteilerblock 108 verlaufende Spritzkanäle zugeführt. Der Verteilerblock 108 kann dabei eine U- bzw. Doppel-U-Form aufweisen, je nachdem, ob der Kasten zwei oder vier Griffe in gegenüberliegenden Wandungen aufweist. Anstelle einer Doppel U-Form können auch eine Flachkreuzform oder andere geeignete Geometrien gewählt werden.

Zur Ausbildung des Mittelgriffs 32 wird ein entsprechendes Prinzip auf einem abgewandelten Werkzeug verwendet, die einen Hohlraum begrenzen, der einerseits von den Innenwandungen der Schieber und andererseits von dem Querschenkel 38 sowie den Seitenschenkeln 42, 44 des integral mit dem Kastenkörper 12 ausgebildeten Mittelgriffs 32 begrenzt ist.

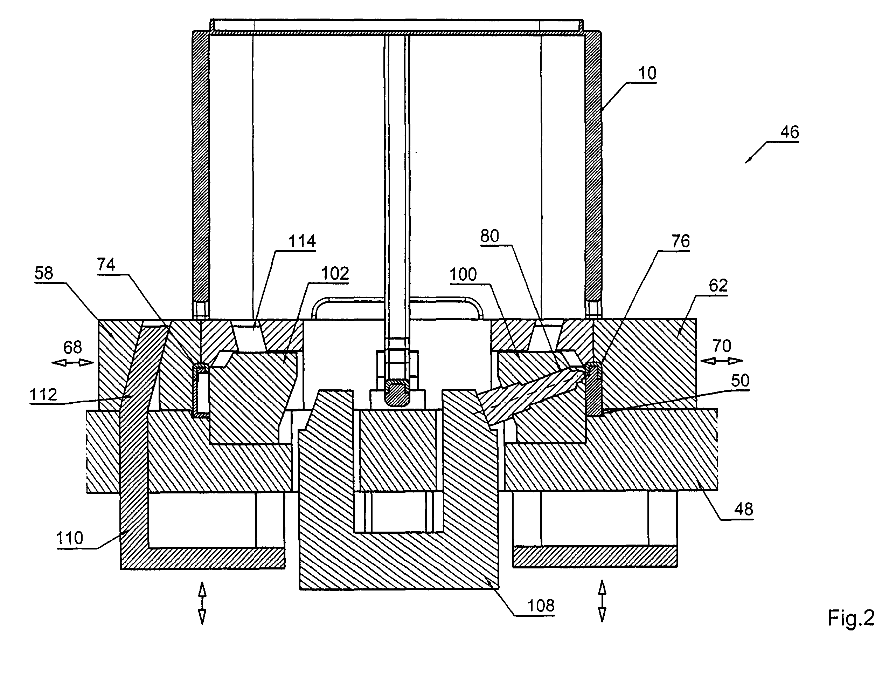

Zum Verstellen der Schieber 52, 54, 56, 58 werden diese von Schenkeln eines Betätigers 110 durchsetzt. Wie anhand der Fig. 2 verdeutlicht wird, weisen die jeweiligen in die Schieber 56, 58 eingreifenden Schenkel bzw. deren Endabschnitte 112, 114 einen zur Horizontalen geneigten Verlauf derart auf, dass dann, wenn der Betätiger 110 gemäß Fig. 2 angehoben wird, die Schieber 56, 58 auseinander gefahren werden. Beim Absenken des vorzugsweise hydraulisch betätigten Betätigers 110 werden sodann die Schieber 56, 58 aufeinanderzu gefahren, um den ersten Abschnitt 34 eines Griffs zu umfassen und den Hohlraum 74 auszubilden, der mit dem Kunststoffmaterial zur Ausbildung des zweiten Abschnitts 36 gefüllt wird.

Selbstverständlich werden die den jeweiligen Handgriffen 24, 26, 28, 30, 32 zugeordneten Schieber 52, 54, 56, 58, 60, 62, 64 synchron verstellt.

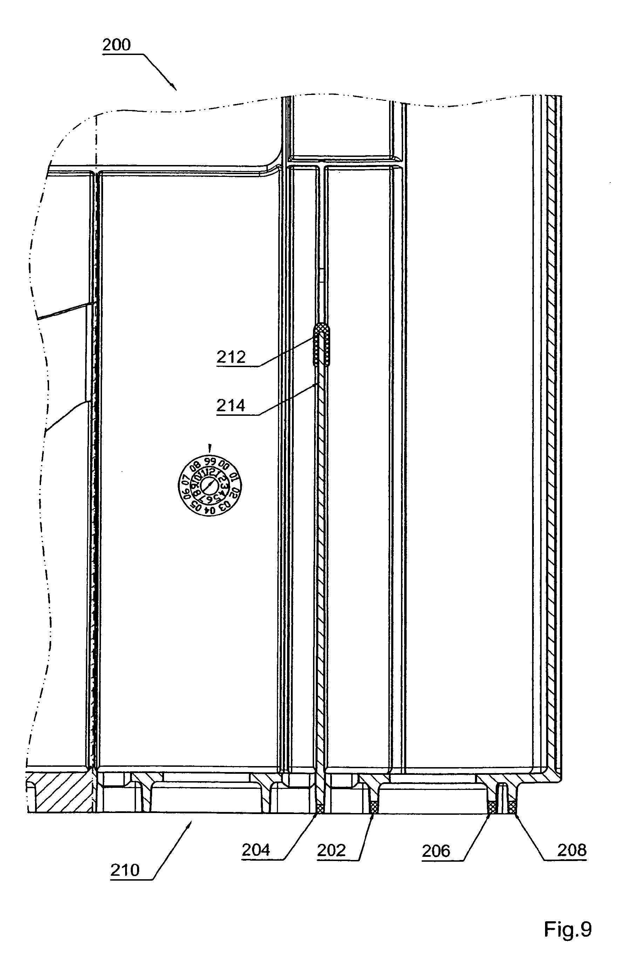

Der Fig. 9 ist ein Abschnitt eines Flaschenkastens 200 zu entnehmen, bei dem Abschnitte 202, 204, 206, 208 des Bodens 210 bzw. dessen Stege entsprechend der erfindungsgemä-ßen Lehre ausgebildet sind. Auch ist oberer Rand 212 eines Fachwerkabschnittes 214, an dem sich Flaschen abstützen, entsprechend ausgebildet.

In Bezug auf den Boden- bzw. Fachwerkabschnitt ist anzumerken, dass die Abschnitte unterschiedlicher Materialien nicht zwingend über eine Stufe bzw. die Außenflächen bündig ineinander übergehen müssen.

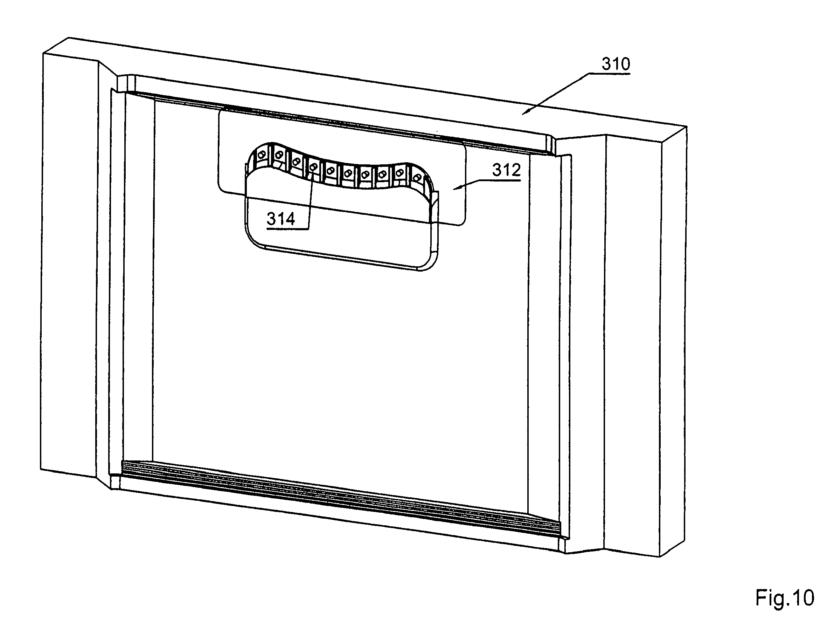

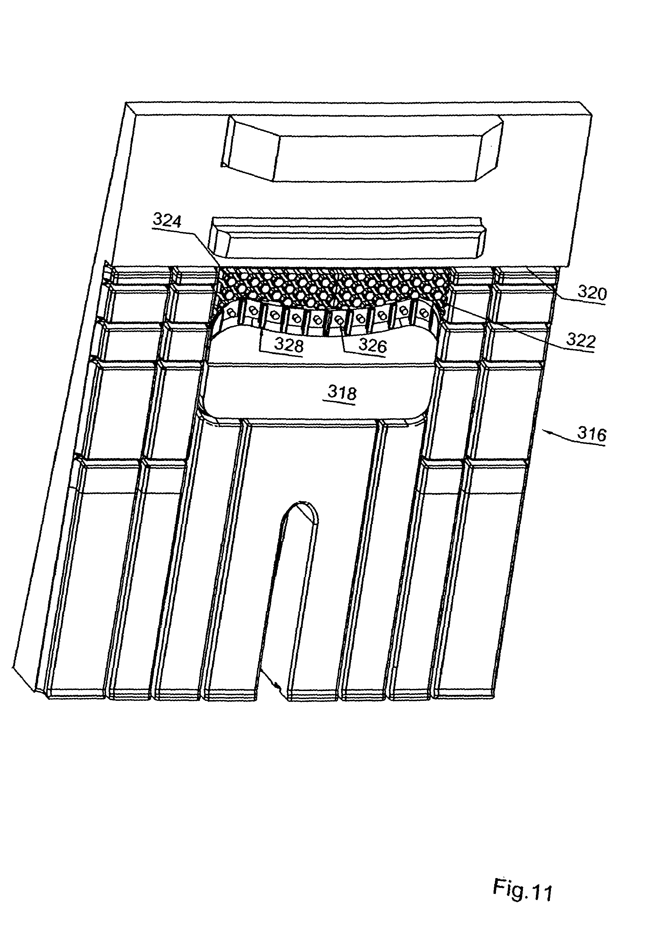

Den Fig. 10 und 11 sind die Erfindung prägende Merkmale zu entnehmen, die sicherstellen, dass im gewünschten Umfang die - im Ausführungsbeispiel Griffe bildenden - Materialien derart miteinander verbunden werden, dass ein Lösen des in einem zweiten Spritzgießwerkzeugs gespritzten zweiten Abschnitts von dem integral mit dem Kasten ausgebildeten ersten Abschnitt ausgeschlossen ist.

So ist in Fig. 10 ein Werkzeugteil 310 des zuvor erläuterten ersten Spritzgießwerkzeuges dargestellt, mit dem - ebenfalls im Ausführungsbeispiel - der Flaschenkasten 10 gespritzt wird. Dabei ist der erste Abschnitt 312 des auszubildenden Griffs strukturiert, um eine große Kontaktfläche zwischen dem Abschnitt 312, der mit dem Kasten 10 gespritzt wird, und dem anschließend in dem zweiten Spritzgießwerkzeug zu spritzenden zweiten Abschnitt sicherzustellen. Hierdurch ist gewährleistet, dass eine sichere Verbindung zwischen dem ersten und zweiten Material erfolgt, so dass der ausgebildete Griff starken mechanischen Beanspruchungen und auch im erforderlichen Umfang chemischen Einflüssen standhält.

Wie aus der Darstellung gemäß Fig. 10 ersichtlich ist, wird der erste Abschnitt 312 von zylindrischen Vorsprüngen 314 durchsetzt, um am fertigen Kasten in dem ersten Abschnitt des Griffs Löcher auszubilden. Dieser Bereich wird in das zweite Spritzgießwerkzeug eingebracht, um sodann mit dem zweiten Material umspritzt zu werden. Dabei durchsetzt das zweite Material die durch die zylindrischen Vorsprünge 314 sich ausbildenden Löcher, so dass im gewünschten Umfang die erforderliche Verbindung zwischen dem ersten und zweiten Material erfolgt, wobei die Löcher zusätzlich eine mechanische Verbindung ermöglichen.

Neben entsprechenden durch die zylindrischen Vorsprünge 314 gebildeten Löcher können Innen- und Außenseite des ersten Abschnitts zusätzlich strukturiert sein. Dies wird anhand der Fig. 11 deutlich, der eine weitere Ausführungsform eines ersten Werkzeugteils 316 eines ersten Spritzgießwerkzeuges zu entnehmen ist. Man erkennt, dass der herzustellende Kasten im Bereich des auszubildenden Griffs 318 bis zu seinem oberen Rand 320 strukturiert ist. Dies erfolgt nach dem Ausführungsbeispiel der Fig. 11 dahingehend, dass sechseckige Vorsprünge mit zwischen diesen verlaufenden Vertiefungen 322 in dem eine Kastenseite bildenden Werkzeugteil 316 vorhanden sind, die in dem gespritzten Kasten im Bereich des Griffs 318 zu einer Wabenstruktur führen. Unterhalb dieser Struktur sind entsprechend der Fig. 10 zylindrische Vorsprünge 326 vorhanden, um entsprechende Durchbrechungen oberhalb der Aussparung bzw. des Griffs 318 zu erzeugen.

Durch die durch die Vorsprünge 322 und Vertiefungen 324 in dem fertigen Kasten gebildete Struktur wird eine große Oberfläche erzeugt, die sicherstellt, dass im erforderlichen Umfang die innige Verbindung zwischen dem ersten und zweiten Material erfolgt, wodurch wiederum eine hohe Stabilität des Griffbereichs gewährleistet ist. Dabei ist insbesondere das zweite Material weicher als das des Kastens selbst, so dass sogenannte Softtouch-Griffe zur Verfügung stehen, die einerseits einen hohen Tragekomfort gewährleisten und andererseits hohen mechanischen Beanspruchungen bzw. chemischen Einflüssen im erforderlichen Umfang standhalten.

Durch die durch die Vorsprünge 322 und Vertiefungen 324 erfolgte Strukturierung im Griffbereich ist zusätzlich eine hohe mechanische Stabilität gegeben, die es ermöglicht, dass die ansonsten üblicherweise vorhandenen Rippen 328 nicht oder nur bereichsweise vorhanden sein müssen.

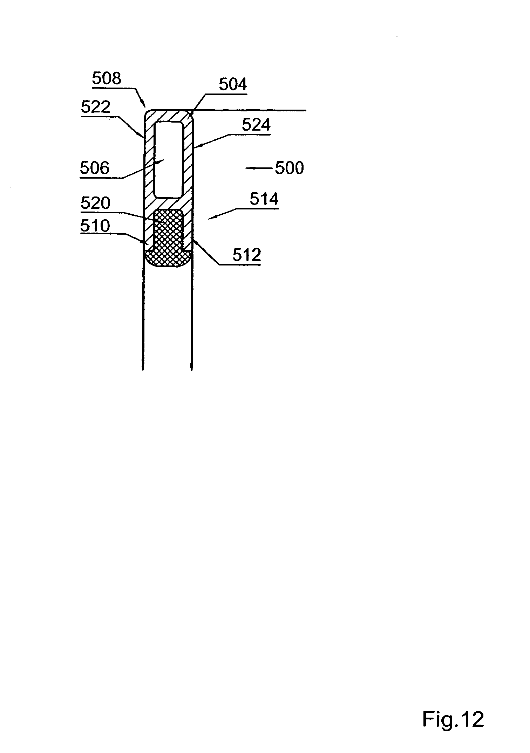

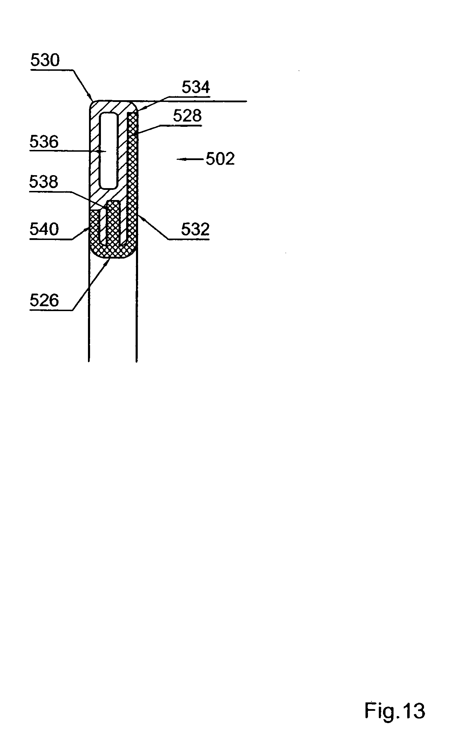

Den Fig. 12 und 13 sind weitere bevorzugte Ausbildungen der erfindungsgemäßen Lehre zu entnehmen. So verdeutlichen die Schnittdarstellungen eines Handgriffs 500 bzw. 502 eines Behältnisses wie Flaschenkastens, dass ein erster aus einem harten Material bestehender Abschnitt 504 (Figur 12) aus einem Airmould-Kammer 506 aufweisenden handgriffoberseitigen Abschnitt 508 und einem durch Stege 510, 512 bestehenden handgriff aussparungsseitigem Abschnitt 514 besteht, der seinerseits von dem aus weicherem Material bestehenden zweiten Material ausgefüllt ist. Der aus dem weicheren Material bestehende zweite Abschnitt 520 weist im Schnitt eine Pilzform auf, wobei dessen Kopf griffaussparungsseitig abgerundet und sich bis zur jeweiligen Außenfläche 522, 524 des ersten Abschnitts 504 aus Hartmaterial erstreckt.

Das Ausführungsbeispiel der Fig. 13 unterscheidet sich von dem der Fig. 12 dahingehend, dass sich die weichere Komponente als der zweite Abschnitt 526 entlang eines zurückversetzten Innenflächenbereichs 528 des aus Hartmaterial bestehenden ersten Abschnitts 530 des Griffs 502 erstreckt, wobei Außenfläche 532 des zweiten Abschnitts 526 bündig oder nahezu bündig in Außenfläche 534 des ersten Abschnitts 530 übergeht. Dieser weist ebenfalls eine Airmould-Kammer 536 auf, wie die Schnittdarstellung verdeutlicht. Des Weiteren ist der erste Abschnitt 530 mit einem griffaussparungsseitig verlaufendem Längsschlitz 538 versehen, innerhalb dessen sich der zweite Abschnitt 526 erstreckt. Ferner weist der erste Abschnitt 530 griffaussparungsseitig und entlang seiner Außenfläche einen zurückversetzten Abschnitt 540 auf, der ebenfalls mit dem weichen Material ausgefüllt ist. Au-ßenseitig gehen der erste Abschnitt 530 und der zweite Abschnitt 526 ebenfalls bündig ineinander über, wie die Schnittdarstellung verdeutlicht. Diese vermittelt des Weiteren, dass der zweite aus weicherem Material bestehende Abschnitt 526 im Schnitt eine W-Geometrie mit unterschiedlich langen Außenschenkeln aufweist. Der mittlere Schenkel ist dabei vorzugsweise länger als behältnisaußenseitig verlaufender Abschnitt.

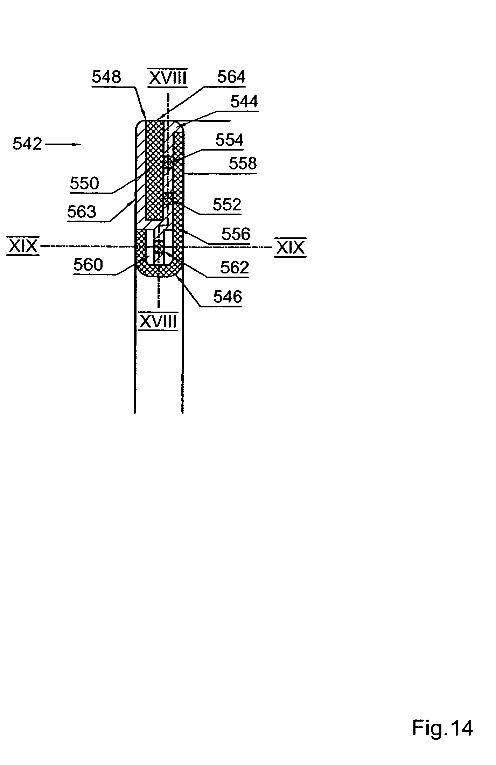

Ein im Schnitt dargestellter Griff 542 nach der Fig. 14 besteht ebenfalls aus einem ersten Abschnitt 544 härteren Materials und einen diesem teilweise umgebenden bzw. innerhalb von diesem erstreckenden aus weicherem Material bestehenden zweiten Abschnitt 546. Um ein sicheres Verankern des weicheren Materials in dem ersten Abschnitt 544 sicherzustellen, weist dieser einen vom oberen Rand 548 ausgehenden Schlitz 550 auf, der Verbindungsdurchbrechungen 552, 554 zu einem zurückversetzten Bereich 556 der Innenfläche 558 des Griffs 542 übergeht.

Ein griffaussparungsseitiger Abschnitt 560, der unterhalb des Schlitzes 550 verläuft, weist eine wellenförmige Geometrie mit Durchgangsbohrungen 562 auf, die neben den Bohrungen 552, 554 als Verankerungen für das weichere Material, also den zweiten Abschnitt 546 dienen. Der zweite Abschnitt 544 erstreckt sich entsprechend der Darstellung innerhalb des zurückversetzten Bereichs 556 des ersten Abschnitts 544 sowie des Stegs 560 bis zur Au-ßenseite 562 des Griffs 542, wobei der zweite Abschnitt 546 bündig in die Außenseite 562 des ersten Abschnitts 544 übergeht.

Anspritzpunkt für das weichere Material - die sogenannte Weich-Spritzkomponente - liegt vorzugsweise im Bereich des Zwischenraums 550 und ist mit dem Bezugszeichen 564 versehen. Somit erstreckt sich die Weichkomponente von dem Schlitz 550 über die Durchgangsbohrungen 552, 554 in den zurückversetzten Bereich 556 des ersten Abschnittes 544 bis um den Steg 560 herum. Gleichzeitig durchsetzt die Weichkomponente die Durchgangsöffnungen 562 im Steg 560.

Alternativ oder ergänzend kann auch ein Anspritzpunkt im Bereich des Abschnitts 556 verlaufen, von dem sich die Weichkomponente einerseits über die Bohrungen 552, 554 in den Längsschlitz 550 und andererseits entlang des zurückversetzten Bereichs 556 um den Steg 560 herum bis zur Vorderseite 562 des ersten Abschnittes 544 erstreckt.

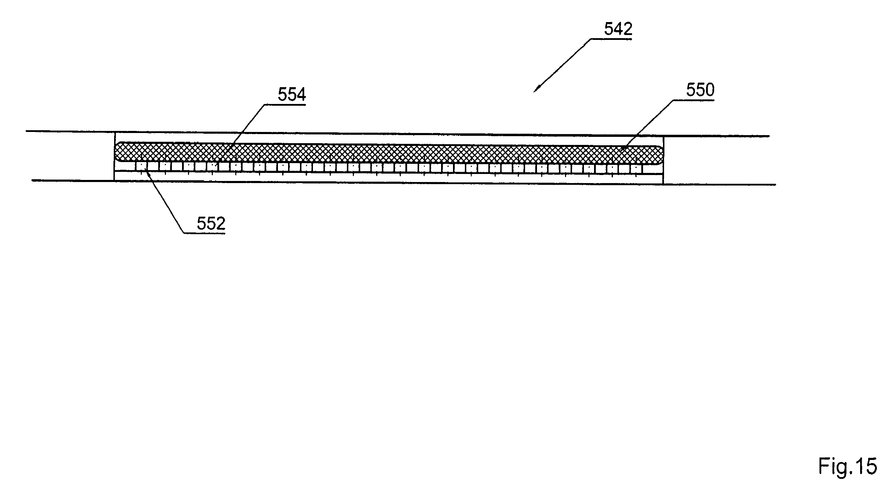

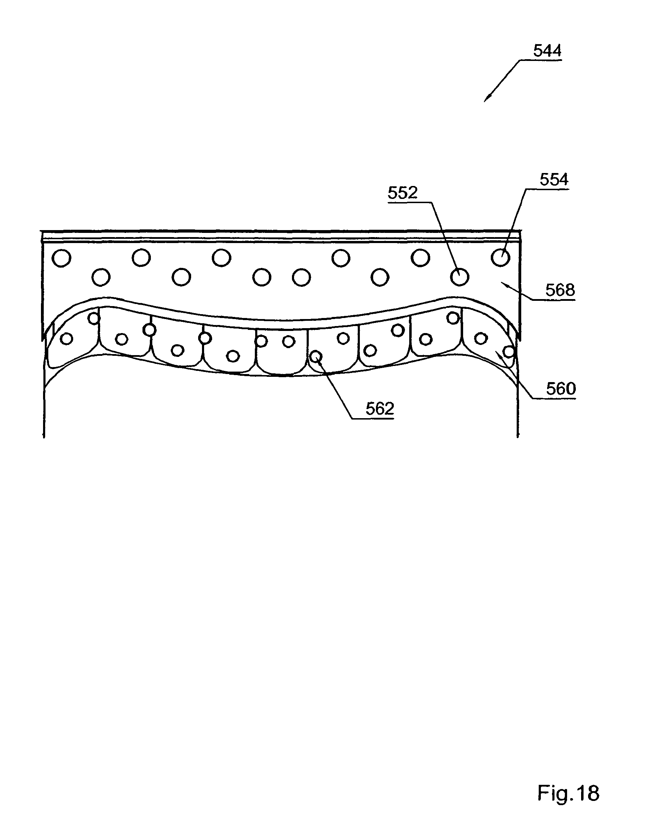

Eine Draufsicht auf den Griff 542 gemäß Fig. 14 ist der Fig. 15 zu entnehmen. Man erkennt den mit der Weichkomponente gefüllten Schlitz 550 sowie die Durchbrechungen 552, 554, die jeweils in parallel zueinander verlaufenden Reihen, jedoch versetzt zueinander verlaufen können. Dies ergibt sich auch aus der Fig. 18, die einen Schnitt entlang der Linie XVIII in Figur 14 wiedergibt, soweit die Hartkomponente, also der erste Abschnitt 544 betroffen ist. Man erkennt einen oberen von den Verbindungsbohrungen 552, 554 durchsetzten Abschnitt 564, der doppelwandig ausgebildet ist. Der Stegabschnitt 560 weist ebenfalls Bohrungen 562 auf, die entsprechend den Verbindungsbohrungen 552, 554 versetzt zueinander verlaufen, um die Hartkomponente bzw. den ersten Abschnitt 544 nicht unerwünscht zu schwächen.

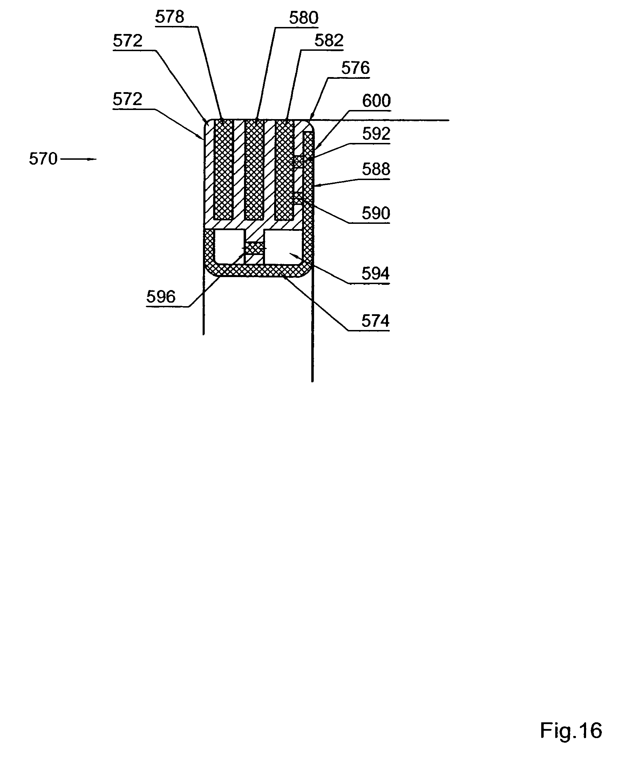

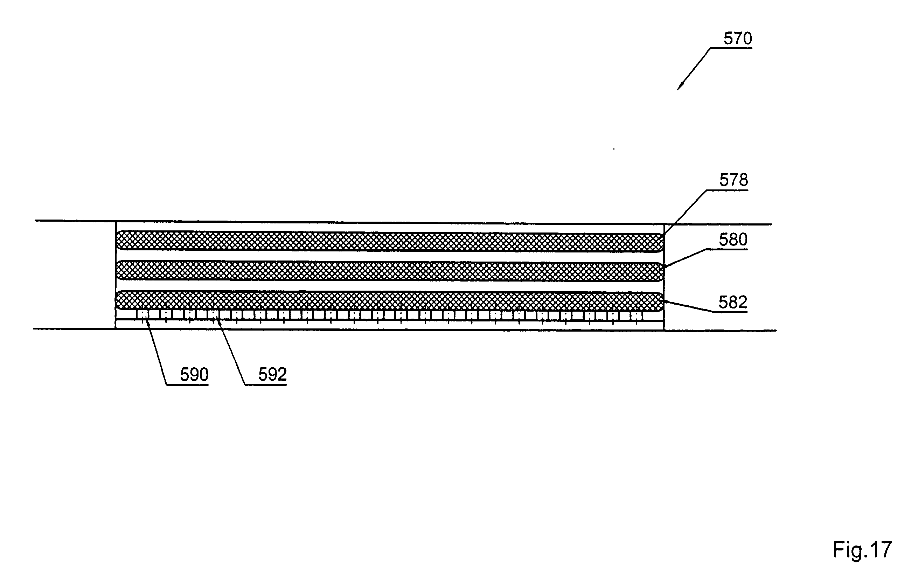

Die Fig. 16 und 17 beziehen sich auf eine weitere Ausführungsform eines erfindungsgemäß ausgebildeten Griffs 570, bestehend aus einem ersten Abschnitt 572 aus einer harten Komponente und einem zweiten Abschnitt 574 aus einer weichen Komponente. Abweichend vom Ausführungsbeispiel der Fig. 13, 14 und 18 gehen vom oberen Rand 576 des ersten Abschnitts 572 drei Längsschlitze 578, 580, 582 aus, die untereinander über nicht dargestellte Verbindungsbohrungen und außerdem mit einem innenseitig verlaufenden zurückversetzten Abschnitt 588 in Verbindung stehen. Der zurückversetzte Abschnitt 588 ist entsprechend der Darstellung über Verbindungsbohrungen 590, 592 mit dem angrenzenden Schlitz 582 verbunden.

Des Weiteren sind die Längsschlitze 578, 580, 582 über nicht dargestellte Stege in Querkammern verbunden, um eine gewünschte Stabilität sicherzustellen. Die die Kammern unterteilenden Stege enden beabstandet zum oberen Rand 576 des ersten Abschnittes 572. Entsprechend ist auch der Längsschlitz 550 des Griffs 542 gemäß Figur 14 in Querkammern unterteilt.

Ansonsten weist der Griff 570 einen prinzipiellen Aufbau entsprechend der Fig. 14 auf, d. h. der erste Abschnitt 572 hat einen unteren stegartigen Abschnitt 594 einer Wellengeometrie mit Verankerungsbohrungen 596, wie dies anhand der Fig. 18 im Zusammenhang mit dem Griff 542 verdeutlicht worden ist. Insoweit wird auf die entsprechende Offenbarung verwiesen.

Der Griff 570 ist in Fig. 17 noch einmal in Draufsicht dargestellt. Man erkennt die von der Weichkomponente ausgefüllten Längsschlitze 578, 580, 582 sowie die zu dem zurückversetzten Bereich 588 führenden und mit der Weichkomponente ausgefüllten Verbindungsbohrungen 590, 592.

Ein Anspritzpunkt für die Weichkomponente kann im Bereich eines Längsschlitzes (Anspritzpunkt 598) oder des zurückversetzten Bereichs 588 (Anspritzpunkt 600) verlaufen.

Dabei sollte dann, wenn der Einspritzpunkt 600 innenseitig im zurückversetzten Bereich 588 vorgesehen ist, ersterer im oberen Bereich, also griffoberseitig verlaufen.

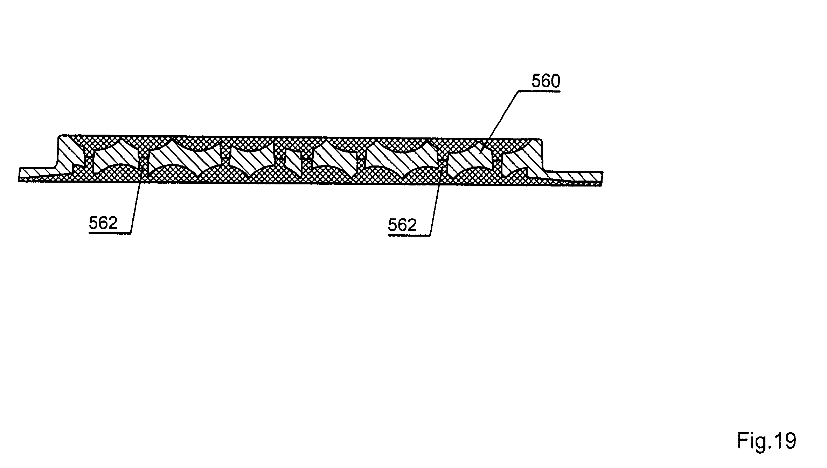

Die Wellenstruktur und die Art der Verankerung im Bereich des Steges 560 bzw. 594 des Griffs 542 bzw. 570 soll noch einmal anhand der Schnittdarstellung XIX - XIX in der Figur 14 anhand der Darstellung in Fig. 19 verdeutlicht werden. Man erkennt, dass der Steg 560 des ersten Abschnittes 544 eine Wellengeometrie aufweist, die von den Verankerungsbohrungen 562 durchsetzt ist. Andere Geometrien des Steges 560 sind selbstverständlich gleichfalls möglich. Die Wellengeometrie hat jedoch den Vorteil, dass der Griff unterseitig eine hohe Stabilität erfährt.

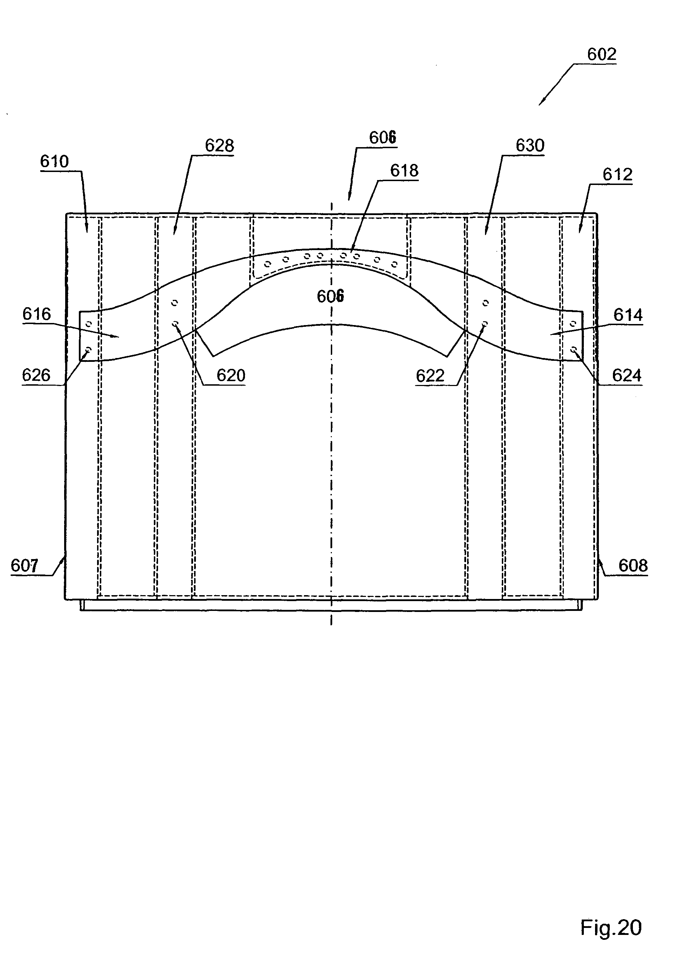

In der Fig. 20 ist eine Breitseite eines im Griffbereich erfindungsgemäß ausgebildeten Kastens 602 wiedergegeben. Man erkennt einen Griff 604, der von einer Aussparung 606 unterseitig begrenzt ist. Der Griff 604 selbst weist entsprechend der erfindungsgemäßen Lehre einen ersten Abschnitt aus hartem Material und einen zweiten Abschnitt aus weicherem Material auf, das sich zumindest griffunterseitig und entlang Kasteninnenseite erstreckt. Bereichsweise kann die Weichkomponente auch entlang Außenseite des Kastens vorgesehen sein, wie die zuvor wiedergegebenen Erläuterungen verdeutlicht haben.

Entsprechend der Darstellung der Fig. 20 erstreckt sich die Weichkomponente auch außerhalb des Griffs 604, und zwar oberhalb der Aussparung 606 bis hin zum Längsrand 607 bzw. 608, und zwar bis in den Bereich von Außenholmen 610, 612, in denen die entsprechenden aus der Weichkomponente bestehenden Abschnitte 614, 616 verankert werden. Die Abschnitte 614, 616 aus der Weichkomponente gehen ineinander über und sind über einen schmaleren Abschnitt 618 im Bereich des Griffs 604 miteinander verbunden. Der schmalere Abschnitt 618 ist dabei der zweite Abschnitt des Griffs.

Im Bereich der Abschnitte 616, 614 weist die Weichkomponente eine relativ geringe Wandstärke im Bereich von 0,6 und 1,2 mm auf, die insbesondere in etwa 1,0 mm betragen kann. Damit jedoch Außenseite der Abschnitte 614, 616 bündig mit Außenfläche des Kastens 602 verläuft, weist die entsprechende Wandung des Kastens 602 einen entsprechenden zurückversetzten Verlauf auf, der vollständig oder nahezu vollständig von den auch als Flyer bezeichneten Abschnitten 614, 616, 618 ausgefüllt ist.

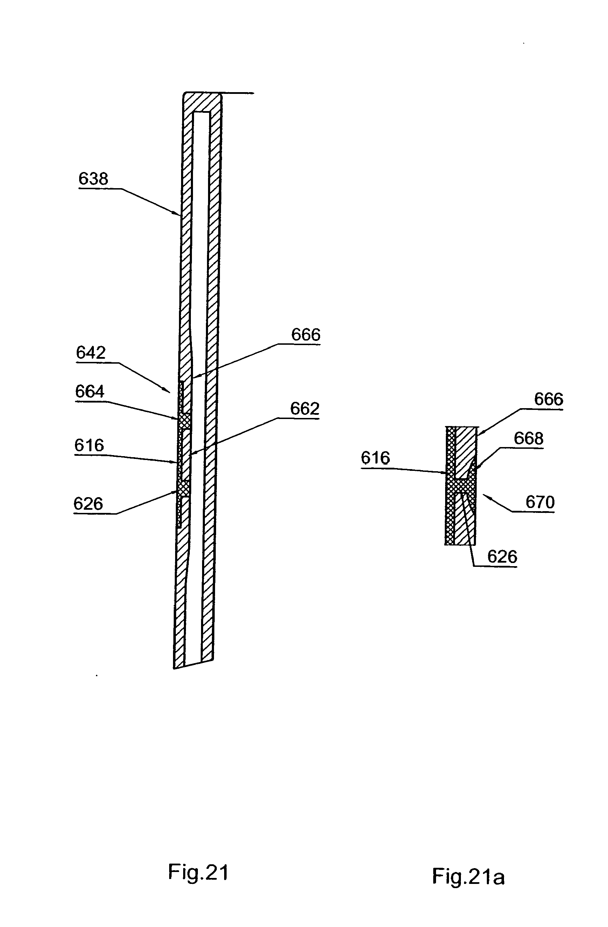

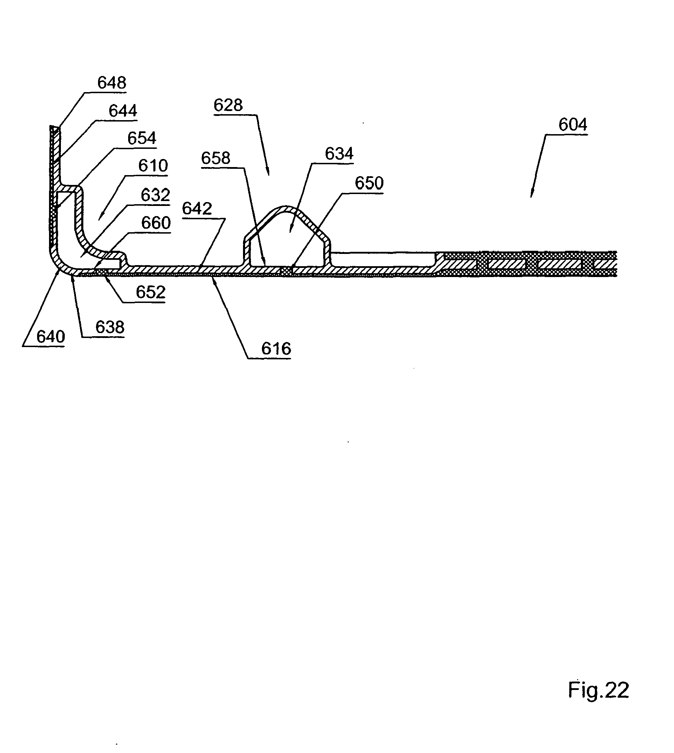

Um die Weichkomponente mit den Abschnitten 614, 616 mit dem Kasten 602 zu verankern, können - entsprechend den Erläuterungen im Zusammenhang mit den Stegen 560, 594 in Fig. 14, 16, 18 - Verankerungsbohrungen 618, 620, 622, 624 vorgesehen sein, und zwar im Bereich der Eckholme 610, 612 sowie der Zwischenholme 628, 630, in denen der Kasten 602 doppelwandig ausgebildet ist. Dies wird anhand der Fig. 21, 22 näher erläutert.

Wie die Fig. 22 verdeutlicht, sind die Holme 610, 628 doppelwandig ausgebildet und begrenzen einen Hohlraum 632, 634. Außenwandung 636 der Holme 610, 628 werden von der Außenwandung des Kastens 602 gebildet.

Die Außenwandung 636, d. h. in deren Außenfläche 640 sind im Bereich der Flyer, also der Abschnitte 614, 616 gemäß Fig. 20 zurückversetzte Abschnitte 642, 644 ausgebildet, die mit der Weichkomponente ausgespritzt werden. Um die flächigen Abschnitte 614, 616, 648 zu verankern, sind Verankerungsbohrungen 650, 652 654 vorhanden, die in dem Hohlraum 632, 634 der Holme 610, 628 münden. Diese Verankerungs- bzw. Durchgangsbohrungen 650, 652, 654 werden beim Spritzen der Weichkomponente von dieser durchsetzt, so dass die erforderliche Verankerung erfolgt. Dabei ist insbesondere jedoch vorgesehen, dass das Weichkomponentenmaterial sich bereichsweise entlang Innenfläche 658, 660 des Hohlraums 632, 634 bzw. der Wandung 636 erstreckt. Um sicherzustellen, dass die Weichkomponente den Hohlraum 632, 634 nicht ausfüllt, werden beim Spritzen der Weichkomponente in den jeweiligen Hohlraum 632, 634 Stützholme eines Spritzgießwerkzeuges eingebracht.

Damit die Wand 638 im Bereich ihres zurückversetzten Bereichs 642, 644 nicht zu stark geschwächt wird, ist erfindungsgemäß vorgesehen, dass durch Ausbildung der beim Spritzen des Kastens aus dem Hartmaterial verwendeten Holme diese entsprechende Hinterschneidungen aufweisen, die eine Wandstärkenverdickung ermöglichen (Bereich 662 in Fig. 21).

Die Fig. 21 verdeutlicht des Weiteren, dass die Flyer, also die Abschnitte 614, 616 in Figur 20, über Verankerungsbohrungen 626, 664 mit der Außenwandung 638 der Hartkomponenten verankert werden. Gegebenenfalls kann im Bereich der Verankerungsbohrungen 626, 664, und zwar auf der Innenfläche 666 der Außenwandung 638 eine Senke 668 vorgesehen sein, die von den nicht dargestellten Stützholmen beim Spritzen der Weichkomponente außenseitig abgedeckt wird, so dass die Weichkomponente sich mit einem Bereich 670 innerhalb der Senke 686 erstrecken kann, wodurch eine hinreichende Verankerung des jeweiligen Abschnitts 614, 616 bzw. des Flyers erfolgt, wie die Detaildarstellung in Fig. 21 a) vermittelt.

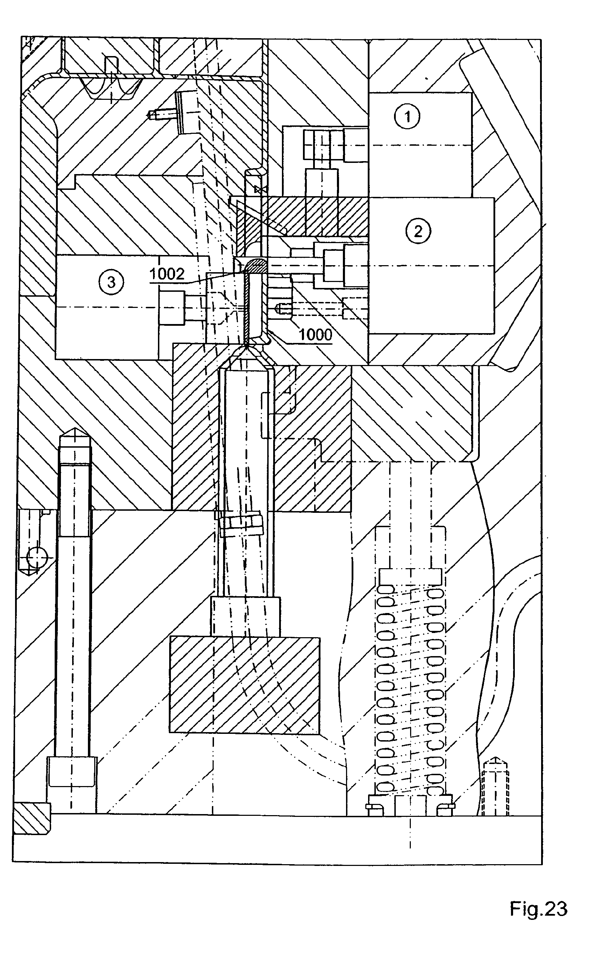

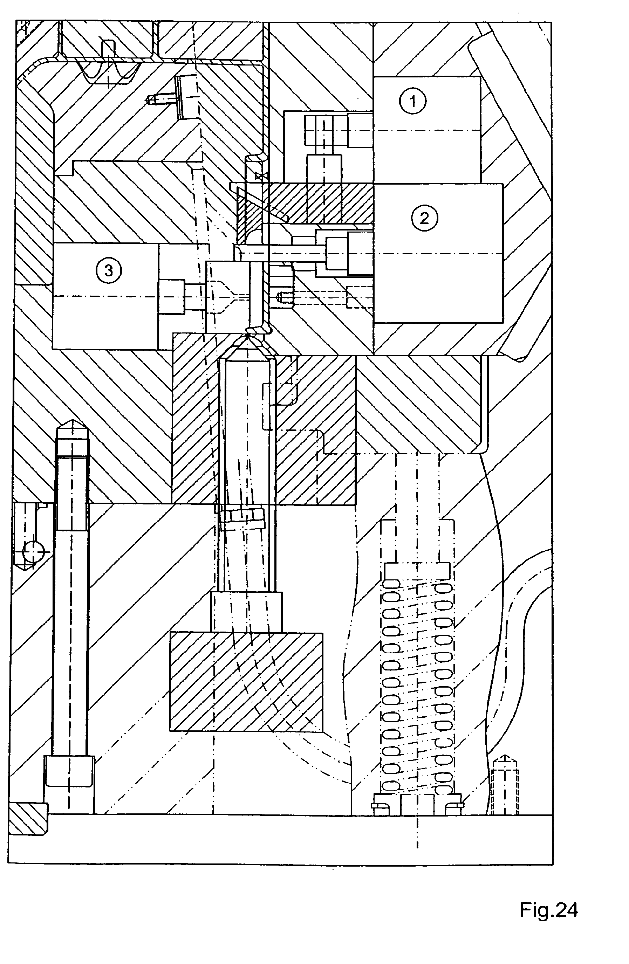

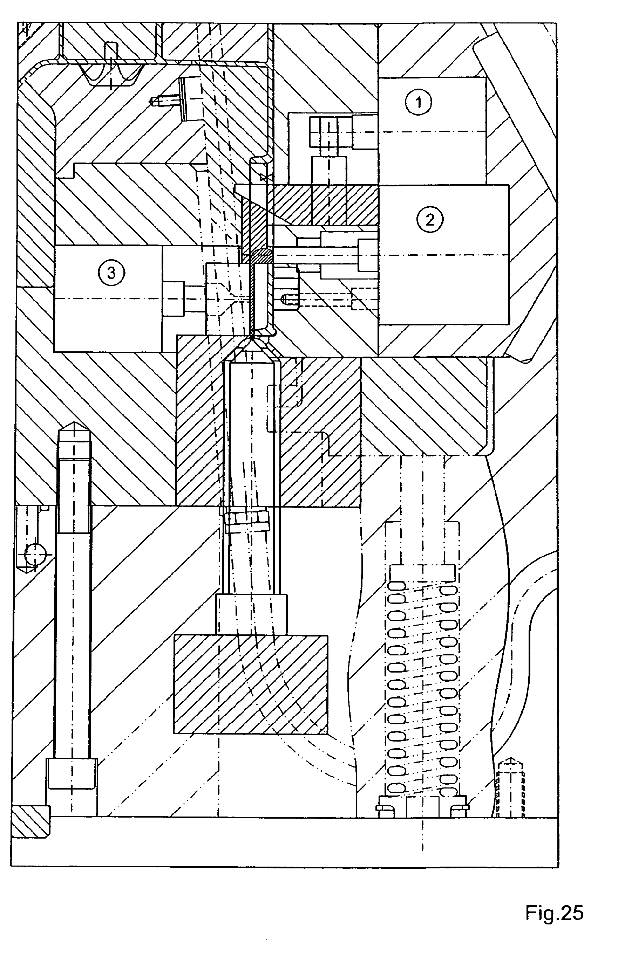

Werden der erste Abschnitt aus einer harten Komponente und der zweite Abschnitt aus einer weichen Komponente vorzugsweise in zwei getrennten Werkzeugen gespritzt, so kann auch ein 2K-Spritzen in einem einzigen Werkzeug erfolgen, wie dies im Ausschnitt rein prinzipiell der Fig. 23 zu entnehmen ist. Das Werkzeug enthält zwei Heizverteiler mit entsprechenden Düsen pro Griff, wobei der Verteiler für die Weichkomponente unterhalb des Formkernes auf der beweglichen Seite liegt. Die Kavität für die Weichkomponente wird durch Schieber gebildet, die durch Zylinder betätigt werden. Beim Spritzen des Kastens, also der Hartkomponente, sind die Zylinder 1, 2 und 3 vorgefahren, so dass die Kavität für die Weichkomponente geschlossen ist. In einem anschließenden Schritt wird der so gebildete und in Figur 23 mit dem Bezugszeichen 1000 versehende Griff aus der Hartkomponente mit der Weichkomponente umspritzt (schraffierter Bereich 1002). Hierbei werden die Zylinder 1, 2, 3 zurückgefahren und die Schieber formen einen Hohlraum bzw. die Kavität um den Griffbereich 1000. Die Position der Schieber werden prinzipiell in den Fig. 24 und 25 verdeutlicht. So ist der Fig. 24 die Spritzstellung für die Hartkomponente und der Fig. 25 die Spritzstellung für die Weichkomponente zu entnehmen.

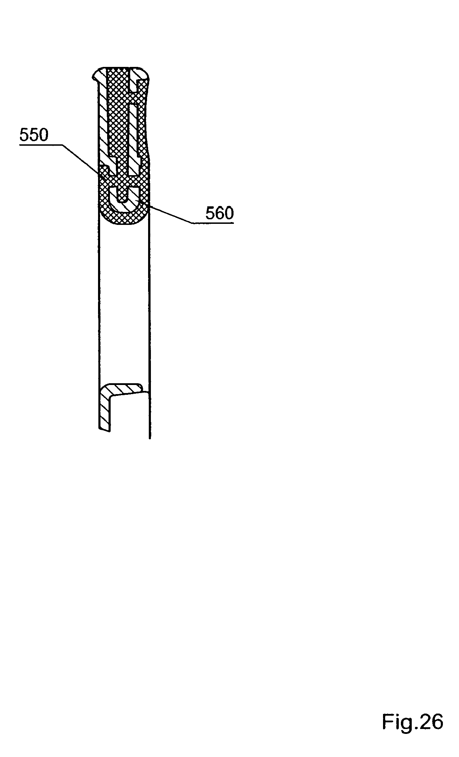

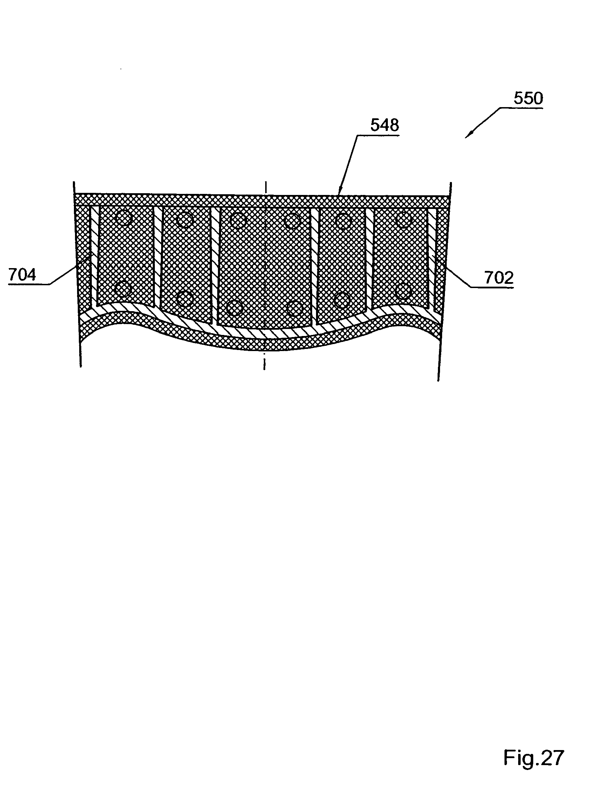

Die Fig. 26 und 27 stellen Varianten der Ausführungsformen der Fig. 14 dar, die gleichfalls auch für die der Fig. 16 gilt. So erkennt man anhand des Längsschnittes in Fig. 27, dass die Kammer 550 bzw. der Längsschlitz in Querkammern über Trennwände 702, 704 unterteilt ist, die beabstandet zum oberen Rand 548 des Griffs 542 enden. Des Weiteren ist erkennbar, dass sich der Längsschlitz oder Zwischenraum 550 bis in den Bereich des Steges 560 erstreckt, so dass eine Materialanhäufung der Hartkomponente vermieden wird. Dies führt zu kürzeren Spritzzyklen.

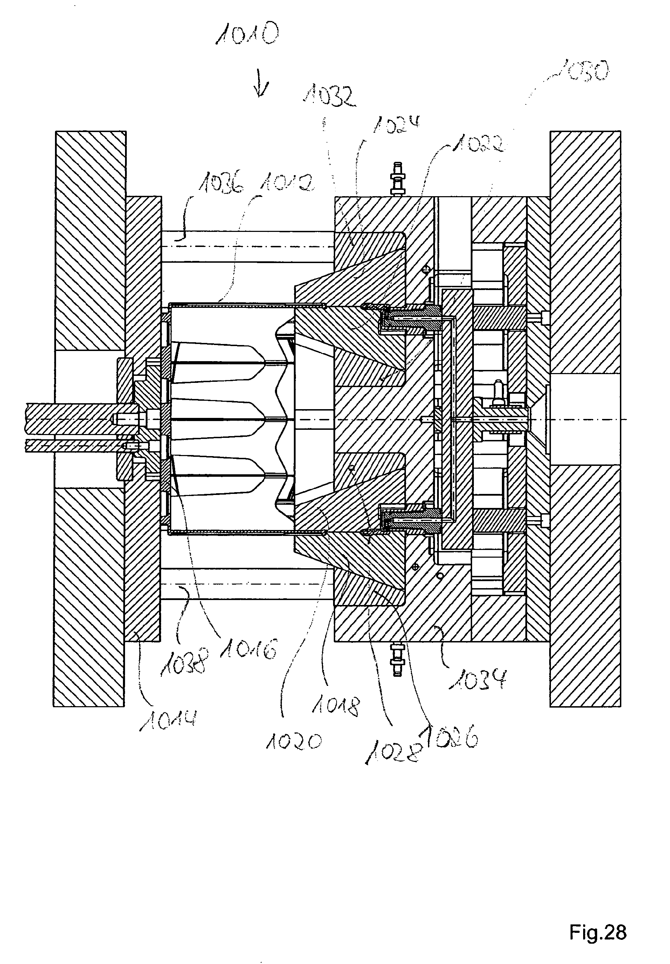

Der Fig. 28 ist eine weitere Ausführungsform eines zweiten Spritzgießwerkzeuges 1010 zu entnehmen, mit der ein Griff eines kastenförmigen Behältnisses 1012 mit weichem Material umspritzt werden kann, wie dies nach der erfindungsgemäßen Lehre vorgeschlagen wird.

Das Spritzgießwerkzeug 1010 weist auswerferseitig eine Halteplatte 1014 auf, über die der Kasten 1012, d. h. dessen Boden 1016 fixiert wird. Das Einbringen kann dabei z. B. mittels eine Roboters erfolgen. Der Kasten 1012 wird sodann mit seinen zu umspritzenden Griffen zwischen als Keilbacken ausgebildeten Schiebern 1018, 1020, 1022 und 1024 bewegt, die beim Einlegen der Griffe auseinander gefahren sind. Hierzu wirken mit den Keilbacken 1018, 1020, 1022, 1024 Verriegelungskeile 1026, 1028, 1030 und 1032 zusammen, mittels derer die Keilbacken 1018, 1020, 1022, 1024 erwähntermaßen auseinander fahrbar sind, ohne dass eine Bewegung entlang deren Längsachsen erfolgt. Die Keilbacken 1026, 1028, 1030 und 1032 gehen ihrerseits von einer Auswerferplatte 1034 aus.

Um beim Spritzen des zweiten Abschnitts, also des sogenannten Softgriffs sicherzustellen, dass die Keilbacken 1018, 1020, 1022, 1024 im erforderlichen Umfang den die Endgeometrie des zweiten Abschnitts oder Softgriffs vorgebenden Hohlraum umschließen, gehen im Ausführungsbeispiel von der Halteplatte 1014 Verriegelungssäulen 1036, 1038 aus, die in der Spritzstellung an den Verriegelungskeilen 1026, 1028, 1030, 1032 aufliegen, so dass diese nicht bewegt werden können mit der Folge, dass die Keilbacken 1018, 1020, 1022, 1024 im erforderlichen Umfang verriegelt sind.

Des Weiteren ist aus der Fig. 28 ersichtlich, dass in den von den Keilbacken 1018, 1020, 1022, 1024 umschlossenen Hohlraum, in den das zweite Material gespritzt wird, die zum Zuführen des plastifizierten Kunststoffs benötigten Angießkanäle bzw. Düsen verlaufen. Dabei verlaufen die Kanäle bzw. Düsen in den kasteninnenseitig verlaufenden Keilbacken 1020, 1022. Die Verriegelungssäulen 1036, 1038 stützen sich demgegenüber an den kastenaußenseitig verlaufenden Verrieglungskeilen 1026, 1032 ab.

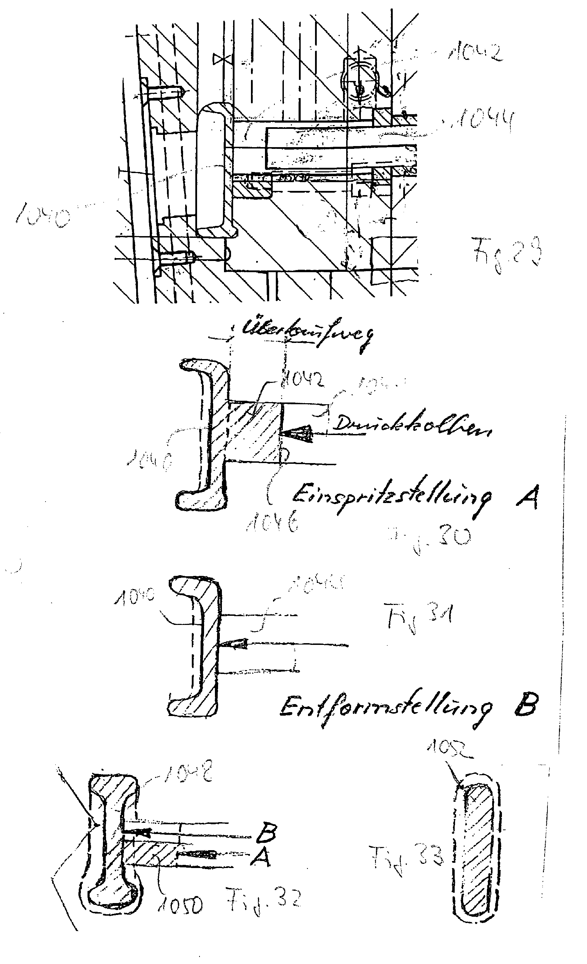

Um eine hinreichende Maßhaltigkeit des ersten Abschnitts oder Griffs des zu spritzenden Kastens sicherzustellen, ist entsprechend der Ausführungsbeispiele der Fig. 29 das erste Spritzgießwerkzeug derart ausgebildet, dass von dem den ersten Abschnitt oder Griff umgebenden Hohlraum eine Überlaufkammer - auch Verdrängerraum 1042 genannt - ausgeht, in dem ein Kolben 1044 verschiebbar ist. Die Kammer 1042 wird dabei beim Zuführen des plastifizierten Kunststoffs mit diesem gefüllt, wobei sich der Kolben 1044 in der zurückgezogenen Stellung befindet. Nach Beendigung des Spritzens und während der gesamten Abkühlphase kann der Kolben 1044 in Richtung des Hohlraums 1040 verstellt werden, um so plastifizierten Kunststoff zusätzlich in den Hohlraum 1040 einzubringen, so dass nicht nur die Oberflächen des herzustellenden Griffs besser ausgedrückt sind, sondern eine höhere Maßhaltigkeit der Spritzteile gewährleistet ist. Eine Schwindung des Griffes wird damit unterbunden. Dies wiederum führt dazu, dass der Griff im erforderlichen Umfang mit Softmaterial umspritzt werden kann. Dies soll anhand der Fig. 30 - 33 verdeutlicht werden.

In der Fig. 30 ist die Stellung wiedergegeben, in der in den die Geometrie des Griffs vorgebenden Hohlraum 1040 Kunststoff gespritzt wird. Dabei ist der Druckkolben 1044 zurückgezogen, so dass in Verdrängerkammer 1042 Kunststoff eindringen kann. Nach Beendigung des Spritzens und während des Abkühlens wird der Druckkolben 1044 in Richtung des Hohlraums 1040 verstellt, wobei in der Endstellung Stirnfläche 1046 des Kolbens 1044 einen Wandabschnitt des Hohlraums 1040 bildet. In dieser Position ist die Entformstellung erzielt, die die Fig. 31 prinzipiell wiedergibt.

Das gleiche Prinzip soll auch anhand der Fig. 32 verdeutlicht werden, wobei ein herzustellender Griff 1048 und somit der entsprechende Hohlraum in dem Werkzeug eine Knochenform aufweist. Mit A und B werden die Stellungen eines Kolbens 1050 symbolisiert, und zwar in der Einspritzstellung (Position A) und in der Entformstellung (Position B).

Ein entsprechender Griff 1048 kann sodann im gewünschten Umfang mit Softmaterial umspritzt werden, und zwar in einem Werkzeug, wie dieses prinzipiell der Fig. 28 zu entnehmen ist. Auch besteht aufgrund der erfindungsgemäßen Lehre die Möglichkeit, einen Griff 1052 vollständig mit sogenanntem Softmaterial zu umspritzen, wie die Fig. 33 vermittelt.

Anzumerken ist noch, dass der Verdrängerraum bzw. die Überlaufkammer 1042 nicht zwingend vollständig mit Kunststoff gefüllt sein muss. Vielmehr besteht auch die Möglichkeit, die Überlaufkammer 1042 nur teilweise mit Kunststoff und ansonsten mit Gas befüllt zu lassen, so dass beim Bewegen des Druckkolbens in die Einspritzstellung durch das zuvor in der Überlaufkammer 1042 vorhandene Gas ein Inmould-Griff ausbildbar ist.

## Patentansprüche

1. Verfahren zum Ausbilden eines Abschnitts (1048), wie Griff, Fachwerkabschnitt, Außenwandung oder Boden, eines kastenförmigen Behältnisses unter Verwendung eines Spritzgießwerkzeuges mit einem den Abschnitt umgebenden Formhohlraum (1040), in den zum Ausbilden des Abschnitts plastifizierter Kunststoff eingebracht wird und nach dem Aushärten das Spritzgießwerkzeug geöffnet und der Abschnitt aus dem Formhohlraum entfernt wird,
**dadurch gekennzeichnet,**
**dass** der plastifizierte Kunststoff sowohl in den Formhohlraum (1040) als auch in einen mit diesem verbundenen volumenveränderbaren Verdrängerraum (1042) eingebracht wird, in dem ein einen Begrenzungsflächenabschnitt (1046) des Formhohlraums bildender Kolben (1044) nach Beendigung des Einbringens des plastifizierten Kunststoffs zum Verdrängen plastifizierten Kunststoffs aus dem Verdrängerraum hinein in den Formhohlraum verstellt wird.

2. Verfahren nach Anspruch 1,
**dadurch gekennzeichnet,**
**dass** der Verdrängerraum (1042) nur teilweise mit dem plastifizierten Kunststoff gefüllt wird.

3. Verfahren nach Anspruch 1 oder 2,
**dadurch gekennzeichnet,**
**dass** der Kolben (1044) vor oder während des Einbringens des plastifizierten Kunststoffs in eine zurückgezogene Stellung bewegt wird und nach Beendigung des Einbringens des plastifizierten Kunststoffs in Richtung des Formhohlraums (1040) verstellt wird derart, dass der Begrenzungsflächenabschnitt des Kolbens in Entformstellung des Spritzgießwerkzeuges in die Begrenzung des Formhohlraums bündig übergeht.

4. Spritzgießwerkzeug zur Herstellung eines Abschnitts (1048), wie Griff, Fachwerkabschnitt, Außenwandung oder Boden, eines kastenförmigen Behältnisses umfassend einen zur Ausbildung des Abschnitts bestimmten und Außengeometrie des Abschnitts vorgebenden Formhohlraum (1040) sowie eine Spritzdüse, über die plastifizierter Kunststoff dem Formhohlraum zuführbar ist,
**dadurch gekennzeichnet,**
**dass** von dem Formhohlraum (1040) ein volumenveränderbarer Verdrängerraum (1042) ausgeht, in dem ein Kolben (1044) verschiebbar angeordnet ist, dessen formhohlraumseitig verlaufende Stirnfläche (1046) Begrenzungsflächenabschnitt des Formhohlraums ist.

5. Spritzgießwerkzeug nach Anspruch 4,
**dadurch gekennzeichnet,**
**dass** der Verdrängerraum (1042) derart dimensioniert ist, dass dieser nach Abschluss des Zuführens des plastifizierten Kunststoffs nur bereichsweise mit dem Kunststoff gefüllt ist.
